# EUROPEAN PATENT SPECIFICATION

(11) **EP 1 325 645 B1**
(45) Date of publication and mention of the grant of the patent: **20.12.2006**
(21) Application number: 01976636.9
(22) Date of filing: 03.10.2001
(51) Int. Cl.: H04Q 7/22, G06Q 90/00, G06F 17/30

(54) **PROCESS FOR MANAGING EXCHANGES OF MESSAGES BETWEEN TELEPHONE SERVICES PROVIDERS AND CUSTOMERS**
VERWALTUNGSVERFAHREN ZUM NACHRICHTENAUSTAUSCH ZWISCHEN TELEFONDIENSTLEISTUNGSANBIETERN UND KUNDEN
PROCEDE PERMETTANT DE GERER L'ECHANGE DE MESSAGES ENTRE DES FOURNISSEURS DE SERVICES TELEPHONIQUES ET DES CLIENTS

(30) Priority: 10.10.2000 IT TO20000942
(43) Date of publication of application: 09.07.2003
(73) Proprietor: Guzzoni, Sergio, I-10043 Orbassano (IT)
(72) Inventor: Guzzoni, Sergio, I-10043 Orbassano (IT)
(74) Representative: Garavelli, Paolo
(86) International application number: PCT/IT2001/000507
(87) International publication number: WO 2002/032169

(56) References cited:
- EP-A- 0 800 320
- WO-A-00/25190
- WO-A-00/26762
- WO-A-93/01665
- WO-A-99/11078
- US-A- 5 561 704

## Description

The present invention refers to a process for managing exchanges of messages between telephone services providers and customers.

With the always wider diffusion of cellular phones, nowadays greater and greater spaces are available for exchanging information and services among owners of telephone apparata, not only at national level, but also, and with rather higher evolution perspectives for the future, at world level. Cellular phones are now a much more promising field of development than the field of computer networks (of the Internet, Intranet, etc. types), that was subjected to enormous developments in these recent years, but that, for the attitude and level of knowledge of the majority of the potential customers, is still not able to guarantee a mass diffusion that is equal to the one in the telephone field in general, and in the cellular phone field in particular.

Within this scenario, an always increasing favour is devoted to the exchange of messages among cellular phones, in particular those messages that are currently called SMS (acronym for "Short Message Service") messages, that allow both exchanging information, and accessing to particular types of services, that are currently limited to services of a scarce global interest, such as oroscopes, stock exchange data, etc. It is evident that a high potential is provided by the presence of an enormous number of cellular phones, in addition to the low operating cost and the easy use of such tools.

US-A-5 561 704 discloses a proximity based toll free communication service for on-line providing users with information related to their location.

WO-A-99 11078 discloses a geographical database for radio system with on-line functionalities related again to the position of a user.

WO-A-00 25190 discloses an on-line business directory with predefined search template for facilitating the matching of buyers to qualified sellers.

WO-A-93 01665 discloses a personal communication system providing supplemental information mode. WO-A-00 26762 discloses an Internet searching system.

EP-A-0 800 320 discloses a dealer-locator service and apparatus for a mobile telecommunications system.

Object of the present invention is thereby exploiting the currently-available technologic resources and those that will be available in the future due to the further technical advancements, providing a process for managing exchanges of messages between telephone services providers and customers managed by an intermediate center, that allows providing meaningful services, that are substantially interesting and efficient for all connected users, at a very low cost and a very high easiness of use for the end user.

A further object of the present invention is providing a process that mutually puts in contact demands and offers for common utility services that can be applied to a range of users that in perspective will be the world, without the need of performing structural investments and exploiting the currently-available telecommunication and telephone resources.

The above and other objects and advantages of the invention, as will appear from the following description, are obtained by a process as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:

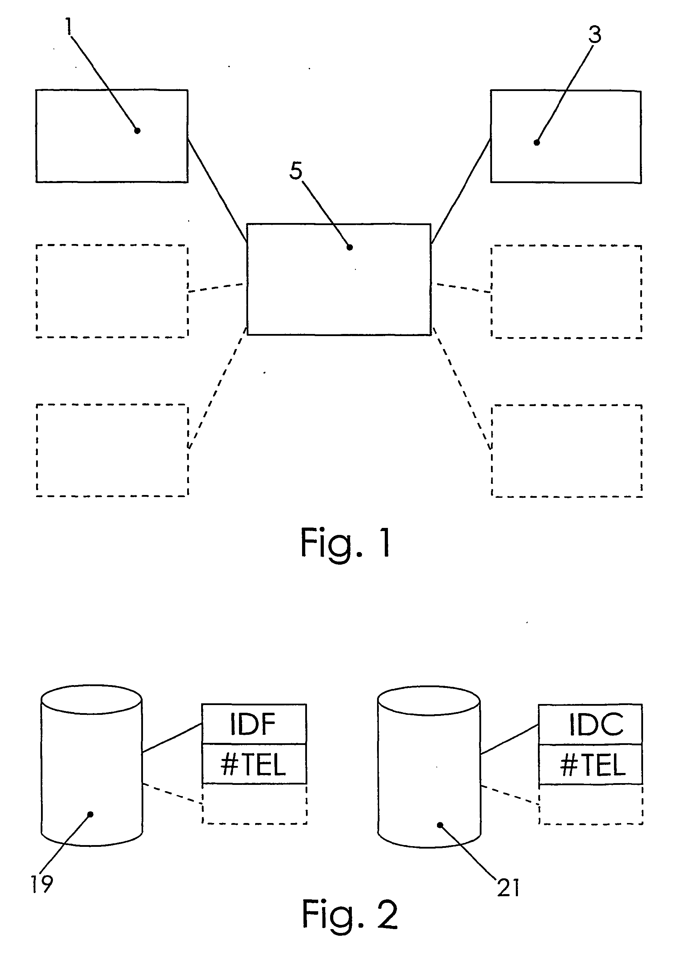

- Figure 1 is a schematic diagram that shows the actors of the process of the invention and the possible interactions among them;
- Figure 2 is a schematic diagram that shows some data bases used by the process;
- Figure 3 is a schematic diagram of other data bases used in the process; and
- Figure 4 shows the main flow of exchange of messages between a provider/customer and the managing center within the process of the invention.

The inventive idea stems from the universal usefulness of the type of proposed service and the discovery that all insertions of a same category contain mandatory, accessory and superfluous information. By discarding the accessory and superfluous information, few essential data remain, that are the only ones really necessary for an univocal creation of a brief and reliable basic insertion with standardised fields and terms, that can thereby be managed by a data base. A problem remains regarding the interaction between users and managing center, in order to obtain the above-described basic insertion. Such problem is currently solved by messages of the interactive SMS type, whose communication typology is similar to the so-called "Script-Tim" one. This obviously does not limit the invention to the particular communication tool being used, being also able to employ arrangements implying the exchange of messages of the voice type or other similar ones.

With reference now to the Figures, the process for managing exchanges of messages can be applied to at least one and preferably a plurality of providers 1 and at least one and preferably a plurality of customers 3 of telephone services: the interaction between these providers 1 and these customers 3 is guaranteed by at least one managing center 5 adapted to cooperate both with the providers 1, and with the customer 3 to manage the process.

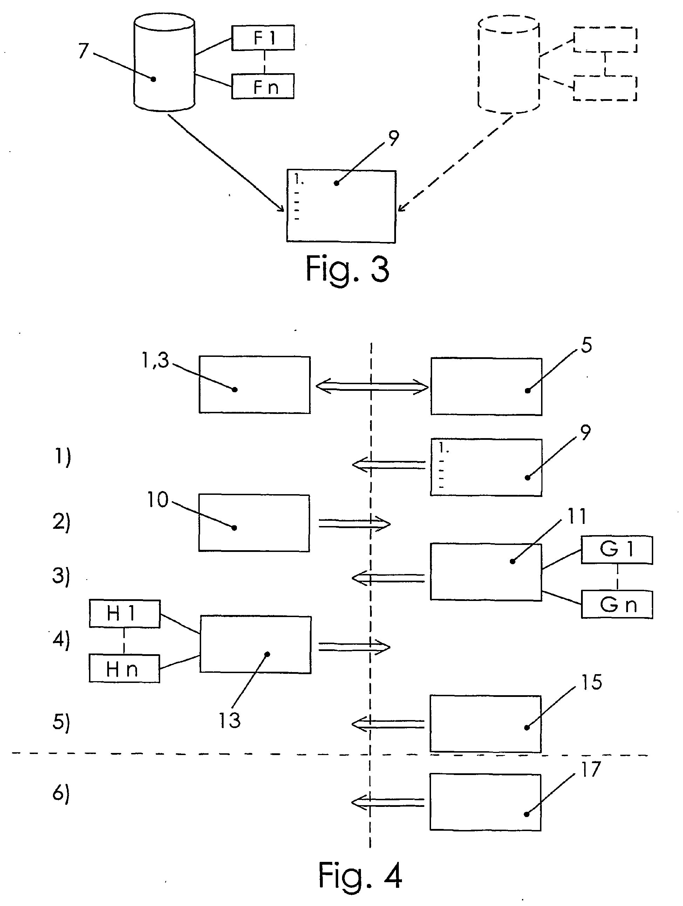

Such process is shown in detail in Fig. 4, that points out the main exchanges of messages (steps (1) to (5)), and comprises the steps of:
- registering each one of the providers 1 by the managing center 5;
- registering each one of the customers 3 by the managing center 5;
- for each one of the services to be offered, the managing center 5 arranging a service data base 7 containing a plurality of fields (F1, ..., Fn) pertaining to necessary information for performing the service;
- arranging a service menu 9 comprising all services offered by the managing center 5; the service menu 9 is able to be accessed by each provider 1 and each customer 3 and can be resident or transmitted on the cellular phone of the provider 1/customer 3 upon switching it on, or periodically, or still upon request of the provider 1/customer 3 himself;
- if a provider 1/customer 3 selects an item of the service menu 9 to which he had access, the provider 1/customer 3 sending to the managing center 5 a message 10 requesting data about the service;
- in case of reception of a data request message 10, the managing center 5 sending to the provider 1/customer 3 a message 11 containing a plurality of fields (G1, ..., Gn) with values of an open and/or closed type: such message 11 is the base for creating an access key to the corresponding service data base 7 in which data related to the selected service are stored;
- when the provider 1/customer 3 receives the message 11, selecting the values of fields (G1, ..., Gn) in a guided way according to the choices of the provider 1/customer 3 and creating a message 13 containing a plurality of fields (H1, ..., Hn) with respective values: such message 13 with values is an access key to the corresponding service data base 7 for the selected service;
- at the end of the selection, the provider 1/customer 3 sending the message 13 with values to the managing center 5;
- when the managing center 5 receives the message 13, comparing the received message 13 with the data records contained in the corresponding data base 7 of the selected service;
- if the fields in message 13 correspond with the fields of at least one of the records in the data base 7, the managing center 5 arranging a message 15 comprising fields of the record of the service data base 7 and information related to service provider 1/customer 3; and
- the managing center 5 sending the message 15 to the provider 1/customer 3.

In particular, in the above-described process, the step of registering each one of the providers 1 by the managing center 5 is performed by assigning a provider identification code (IDF) to each one of the providers 1: such provider identification code (IDF) can be stored into a providers data base 19 together with at least one telephone number for each one of the providers 1, and preferably together with anagraphic information related to the provider 1 and other necessary information for performing the service. The provider identification code (IDF) is used to send to customers 3, as one of the fields of the message 15, the telephone and/or anagraphic data of the provider 1, in case of a positive search result. The above-mentioned registering step of the providers 1 is obviously preceded by a written agreement between provider 1 and managing center 5, that covers the relationships between these parties, in addition to providing for the payment of the managing center 5 for the services rendered to the provider 1. A payment could obviously be provided for the rendered service also as regards the customers 3, according to the commercial policies chosen by the managing center 5.

Similarly, in the above-described process, the step of registering each one of the customers 3 by the managing center 5 is performed by assigning a customer identification code (IDC) to each one of the customers 3, where such customer identification code (IDC) is stored into a customers data base 21 together with at least one telephone number for each one of the customers 3,and preferably together with anagraphic information related to the customer 3 and other necessary information for performing the service. The customer identification code (IDC) is used as coupled with each message 10, 13 sent by the customer 3 to the managing center 5, to identify the customer 3 both for the managing center 5, and for the provider 1 for which the search will provide a positive result. The above-mentioned registering step of the customers 3 is obviously preceded by a written agreement between customer 3 and managing center 5, that covers the relationships between these parties, with particular regard to privacy protection of provider 1/customer 3.

It is also possible that provider identification code (IDF) and customer identification code (IDC) are identical, in which case the corresponding providers data base 19 and customers data base 21 will also be composed of a single global users data base.

In the process of the invention, the closed fields contain a pre-arranged number of values adapted to allow a comparison with corresponding fields of the records of the data base 7: it is possible that the managing center 5 predefines some of these closed fields as key fields for a search, or that it performs the search on all fields supplied by the provider 1 /customer 3.

In order to make it easier to fill-in the message 13 that the provider 1/customer 3 sends to the managing center 5, the previous message 11 sent to the provider 1/customer 3 contains rules for providing values for the fields, and the process comprises the step of performing a congruence check of the values of those fields being filled-in by the provider 1/customer 3: such congruence check prevents the message 13 from being sent to the managing center 5 till all rules for providing values for the fields have been complied with.

In order to make the process of the invention more flexible, above all for possible future developments, it is possible that such process uses, in the transmitted messages, some open fields (as mentioned above), that allow the provider 1/customer 3 to enter values at will used for acquiring more information about the chosen service. These values entered at will could be subjected to congruence checks, possibly according to suitable data tables or data bases (such as, for example, List of Provinces, List of Municipalities, etc.). It is also possible that such open fields are identified as key fields for the searches, and in such a case the process further comprises the step of comparing the open fields with a set of key words with which the records of the data base 7 are coupled. The comparison can be performed according to a similarity law between open field value and established key words, or through other comparison methodologies or algorithms that are currently available in the art or that will be developed in the future. In case of a negative result of the comparison, the managing center 5 could send a message (not shown) to the provider 1/customer 3 requiring him to correctly key-in and newly send the mentioned message.

In case of lack of correspondence between message 13 and records of the selected data base 7, that is, in case the service required by the customer 3 cannot be provided at that time by the provider 1 or vice versa, the process of the invention further comprises (as shown by reference 6) in Fig. 4) the steps of the managing center 5 sending a message 17 notifying the lack of finding data to the provider 1/customer 3; and possibly storing the message 13 by the managing center 5 for a preset period of time within which the search for correspondence on the data base 7 must be performed again. In case of lack of finding (message 17), the insertion could be kept in a waiting state ("standby") for a preset period of time, periodically performing searches for a possible coupling. It is also possible to provide for the transmission of a message (not shown) for the deletion of the insertion by the customers/providers 1/3, in which case it will be necessary to provide for an Insertion Code, that will allow more easily finding and/or deleting the previously-sent insertion.

The steps mentioned above could instead be replaced by an immediate deletion of the message 13 in case of lack of correspondence, or after a specific request by the provider 1/customer 3.

As previously mentioned, the process of the invention is currently very efficient for managing exchanges of telephone messages of the Short Message Service (SMS) type on cellular phones, but obviously it can be applied to any type of information exchange for managing telephone services, and in particular to all those that the future technologic developments will make available, such as for example those using voice messages.

As regards the services that can be provided by the inventive process, a small non-limiting list comprises those about the searches for premises and houses, motor vehicles, jobs, personal meetings, exchange and sales-purchases of new and used objects, and all other types of services that are currently managed by insertions on daily newspapers and various types of magazines.

A further innovative application of the process of the invention consists in the chance of managing international transactions, for which there are currently no instruments available, neither of the paper type, nor of the electronic-information type. For example, if a provider 1 in Poland wishes to export his goods in Italy, he could simply send a message containing his own offer through an international data base: such message, suitably translated, would be available for all potential customers 3 at world level.

A practical non-limiting operating example of the process of the invention will now be described, that is performed by the appearance, on the cellular phone of a provider 1, of a menu 9 containing five items that can be selected, such as the following one:
1. Personal Messages
2. Music
3. Premises
4. Job
5. Vehicles

The provider 1 selects the item in which he is interested from menu 9 and, by pressing the ENTER key twice from his phone, transforms the selected item into a request message 10 to the center 5, that is:
1. Personal Messages
2. Music
3. **P**remises **+ OK +OK**
4. Job
5. Vehicles

The managing center 5 receives a message composed as follows:
1. Provider Identification Code (IDF)
2. Premises

The managing center 5 completes the request of the provider 1 by sending him an interactive SMS message 11 with compulsory path, that can be both written into and selected, such as, for example:
1. Prov:
2. Town:
3. **S**earch **O**ffer **S**ale **R**ent
4. **A**partment **S**hop **F**arm **L**and
5. **I**nhabitable **N**o
6. **L**and **N**o

The provider 1 in turn completes the fields of the message 11 in which he is interested in the following way:
1. Prov: ***To***
2. Town: ***Carmagnola***
3. **S**earch **O**ffer **S**ale **R**ent
4. **A**partment **S**hop **F**arm **L**and
5. **I**nhabitable **N**o
6. **L**and **N**o **+OK+OK**

It must be noted that the provider 1 replied to item 1 by entering ***To*** and to item 2 by entering ***Carmagnola.*** The selection of all the other items is instead completely guided by sub-menus, in order to guarantee a simple use, a logic sequence and a correct data interpretation. In the case shown, items 4, 5 and 6 has only one selectable field, while item 3 is with multiple selection.

After having pressed the cellular phone ENTER key twice, the provider 1 sends the following message to the management center 5:
1. Provider Identification Code (IDF)
2. **tocarmagnola**c**ova**an**c**t**a**n**t**n

Upon decoding the message 13, the managing center 5 receives the following insertion:
*Provider Identification Code (IDF) : Province of Turin Town of Carmagnola I Offer as a Sale or a Rent an Inhabitable Farm with Land.*

As regards the relationship with service customers 3, the managing center 5 receives another message 10 that is composed as follows:
1. Customer Identification Code (IDC)
2. Premises

The managing center 5 completes the request of the customer 3 with the same interactive SMS message 11, in a similar way to what has been previously described:
1. Prov:
2. Town:
3. **s**earch offer **s**ale rent
4. Apartment Shop **F**arm Land
5. **I**nhabitable no
6. **L**and no

In this case, the customer 3 enters the province in which he is searching the premises *(**To**),* by selecting the affected data:
1. Prov: ***To***
2. Town:
3. **s**earch offer **s**ale rent
4. Apartment Shop **F**arm Land
5. **I**nhabitable no
6. **L**and no **+OK+OK**

After having pressed the cellular phone ENTER key twice, the following message 13 is sent to the managing center 5:
1. Customer Identification Code (IDC)
2. **to c**o**v**aan**c**t**a**n**t**n

Upon decoding the message 13, the managing center 5 receives the following insertion:
*Customer Identification Code (IDC) : Province of Turin I Search for a Sale an Inhabitable Farm with Land.*

The insertion of the received data signals the managing center 5, after the related search, the compatibility status between request and offer. Thereby, the managing center 5 will put in contact provider and customer with suitable modes. The compatibility status will be pointed out by the correspondence between some of the selected fields, according, for example, to the customer 3 choices.

A further non-limiting example will now be described, that provides for the use of sub-menus. In fact, as in the previous example related to Premises, items can exist, such as "Land", for which a different type of data is necessary for requesting information. Therefore, sub-menus can be provided comprising open and/or closed fields, that for example specify the nature of the Premises, request peculiar data for a Land or in any case provide for the supply by the customer 3 of a word that is deemed as access key to the data base 7. Upon receiving a message 10 with values of an open term chosen by the customer 3 (for example "Vacuum Cleaner"), the managing center 5 identifies the data base 7 of the type "House/Household Appliances" and sends a message 11 containing closed and/or open fields depending on the necessary data to perform the household appliances service.

Some preferred embodiments of the present invention have been previously shown and described: obviously, to the skilled people in the art it will be readily evident that numerous variations and modifications can be performed, that are functionally equivalent to the previous ones, and that fall within the scope of the invention as pointed out by the enclosed Claims. For example, instead of providing for a providers data base 19 and a customers data base 21, it will be possible to use a single users data base (not shown) in which all process users will be stored, that could become, according to the cases, providers or customers of the various proposed services.

As further alternative, the message 11, in case of a complex request, could be repeated many times and could comprise, as already seen, closed/open fields according to the needs of the data base to define the service. If for example the managing center 5 receives data through the message 13, but such data are lacking some information for such particular request, the managing center 5 sends a new message 11 with a request for the missing data.

## Claims

1. Process for managing exchanges of off-line messages between telephone services providers (1) and customers (3), such process being managed by at least one managing center (5) adapted to cooperate with said providers (1) and customers (3), said process comprising the steps of:
- registering each one of the providers (1) by said managing center (5);
- registering each one of the customers (3) by said managing center (5);
- for each one of the services to be offered, said managing center (5) arranging a service data base (7) containing a plurality of fields (F1, ..., Fn) pertaining to necessary information for performing the service;
- arranging a service menu (9) comprising all services offered by the managing center (5), said service menu (9) being able to be accessed by each provider (1)/customer (3);
- if a provider (1)/customer (3) selects an item of the service menu (9) to which he had access, said provider (1)/customer (3) sends to said managing center (5) an off-line message (10) requesting data about the service;
- in case of reception of a data request message (10), the managing center (5) sends to the provider (1)/customer (3) an off-line message (11) containing a plurality of fields (G1, ..., Gn) with values of a closed type, said off-line message (11) being the base for creating an access key to the corresponding service data base (7) in which data related to the selected service are stored;
- when the provider (1)/customer (3) receives the off-line message (11), the provider (1)/customer (3) selects the values of fields (G1, -., Gn) being able to choose only among pre-set values established according to the choices of the provider (1)/customer (3), and, after having chosen among the pre-set values, the provider (1)/customer (3) creates an off-line message (13) containing a plurality of fields (H1, ..., Hn) with the respective chosen pre-set values, said off-line message (13) with values being an access key to the corresponding service data base (7) for the selected service;
- at the end of the selection, the provider (1)/customer (3) sends the off-line message (13) with values to the managing center (5);
- when the managing center (5) receives the off-line message (13), the managing center (5) compares the received off-line message (13) with the data records contained in the corresponding data base (7) of the selected service;
- if the fields in off-line message (13) correspond with the fields of at least one of the records in the data base (7), said managing center (5) arranges an off-line message (15) comprising fields of the record of the service data base (7) and information related to service provider (1)/customer. (3); and
- the managing center (5) sends the off-line message (15) to the provider (1)/customer (3).

2. Process according to Claim 1, **characterised in that** said step of registering each one of the providers (1) by said managing center (5) is performed by assigning a provider identification code (IDF) to each one of the providers (1), said provider identification code (IDF) being stored into a providers data base (19) together with at least one telephone number for each one of the providers (1) and being used to send to customers (3) in the message (15) information identifying the selected provider (1).

3. Process according to Claim 2, **characterised in that** said provider identification code (IDF) is stored into the providers data base (19) together with anagraphic information related to the provider.

4. Process according to Claim 1, **characterised in that** said step of registering each one of the customers (3) by said managing center (5) is performed by assigning a customer identification code (IDC) to each one of the customers (3), said customer identification code (IDC) being stored into a customers data base (21) together with at least one telephone number for each one of the customers (3) and being coupled with each message (10, 13) sent by the customer (3) to the managing center (5).

5. Process according to Claim 4, **characterised in that** said customer identification code (IDC) is stored into the customers data base (21) together with anagraphic information related to the customer.

6. Process according to Claim 2, 3, 4 or 5, **characterised in that** said provider identification code (IDF) and said customer identification code (IDC) are identical, the corresponding providers data base (19) and customers data base (21) being composed of a single global users data base.

7. Process according to Claim 1, **characterised in that** said closed fields contain a-pre-arranged number of values adapted to allow a comparison with corresponding fields of the records of the data base (7), some of said closed fields being predefined by the managing center (5) as key fields for a search.

8. Process according to Claim 1, **characterised in that** the message (11) sent by the managing center (5) to the provider (1)/customer (3) contains rules for providing values for the fields, and the process comprises the step of performing a congruence check of the values of those fields being filled-in by the provider (1)/customer (3), the congruence check preventing the message (13) from being sent to the managing center (5) till all rules for providing values for the fields have been complied with.

9. Process according to Claim 1, **characterised, in** case of lack of correspondence between message (13) and records of the selected data base (7), **in that** it further comprises the steps of:
- the managing center (5) sending a message (17) notifying the lack of finding data to the provider (1)/customer (3); and
- possibly storing the message (13) by the managing center (5) for a preset period of time within which the search for correspondence on the data base (7) must be performed again.

10. Process according to Claim 1, **characterised in that** it further comprises the step of deleting the message (13) in case of lack of correspondence, or after a request by the provider (1)/customer (3).

11. Process according to Claim 10, **characterised in that** the message (13) is deleted by employing an Insertion Code that univocally identifies the previously-entered message (13).

12. Process according to any one of the previous Claims, **characterised in that** said service menu (9) comprises at least one connected sub-menu containing further information about the services.

13. Process according to any one of the previous Claims, **characterised in that** all exchanged messages (9, 10, 11, 13, 15, 17) comprise fields of the open and/or closed type into which providers (1)/customers (3) can enter values.

14. Process according to any one of the previous Claims, **characterised in that** said center (5) is adapted to perform exchanges of telephone messages of the Short Message Service (SMS) type on cellular phones.

15. Process according to any one of Claims 1 to 13, **characterised in that** said center (5) is adapted to perform exchanges of messages of a voice type.

## Patentansprüche

1. Ein Verfahren zur Verwaltung des Austauschs von Off-line-Mitteilungen zwischen Telefonservice-Anbietern (1) und Kunden (3), wobei dieses Verfahren durch mindestens ein Verwaltungscenter (5) verwaltet wird, das geeignet ist, mit den genannten Anbietern (1) und Kunden (3) zusammenzuarbeiten, und dieses Verfahren folgende Schritte umfasst:
- die Registrierung jedes einzelnen Anbieters (1) durch das genannte Verwaltungscenter (5);
- die Registrierung jedes Kunden (3) durch das genannte Verwaltungscenter (5);
- die Einrichtung für jede einzelne der anzubietenden Leistungen einer entsprechenden Service-Datenbank (7), die jeweils eine Vielzahl von Feldern (F1,_, Fn) enthält, die die Informationen betreffen, welche notwendig sind, um die jeweilige Leistung zu liefern;
- die Einrichtung eines Service-Menüs (9), das alle vom Verwaltungszentrum (5) angebotenen Leistungen umfasst, wobei jeder Anbieter (1)/ Kunde (3) Zugriff auf das genannte Service-Menü haben kann;
- wenn ein Anbieter (1) / Kunde (3) einen Artikel des Service-Menüs (9) wählt, zu dem er Zugang hatte, sendet der genannte Anbieter (1) / Kunde (3) dem genannten Verwaltungscenter (5) jeweils eine Off-line-Mitteilung (10) und verlangt nach Daten über den Service;
- bei Empfang einer Datenanforderungs-Mitteilung (10) schickt das Verwaltungszentrum (5) dem Anbieter (1) / Kunden (3) eine Off-line-Mitteilung (11), die eine Vielzahl von Feldern (G1,_, Gn) mit Werten eines geschlossenen Typs enthält, wobei die genannte Off-line-Mitteilung die Grundlage zur Herstellung eines Zugriffsschlüssels zur entsprechenden Service-Datenbank (7) bildet, in der die Daten bezüglich der gewählten Leistungen jeweils gespeichert werden;
- wenn der Anbieter (1) / Kunde (3) die Off-line-Mitteilung erhält, wählt der Anbieter (1)/ Kunde (3) die Werte der Felder (G1,_, Gn), wobei er nur zwischen vorbestimmten Werten wählen kann, die jeweils gemäß der Wahl des Anbieters (1) / Kunden (3) festgesetzt werden und nachdem er zwischen den vorbestimmten Werten gewählt hat, verfasst der Anbieter (1) /Kunde (3) jeweils eine Off-line-Mitteilung (13), die eine Vielzahl von Feldern (H2, _, Hn) mit den entsprechenden, gewählten, vorbestimmten Werten enthält, wobei die genannte Off-line-Mitteilung(13) mit Werten ein Zugriffsschlüssel zu der entsprechenden Service-Datenbank (7) für die gewählte Leistung ist;
- Nach beendeter Wahl schickt der Anbieter (1) / Kunde (3) die Off-line-Mitteilung (13) mit Werten an das Verwaltungscenter (5);
- Sobald das Verwaltungscenter (5) die Off-line-Mitteilung (13) erhält, vergleicht das Verwaltungscenter (5) die empfangene Off-line-Mitteilung (13) mit den Datensätzen, die in der entsprechenden Datenbank (7) der gewählten Leistungen enthalten sind;
- Stimmen die Felder in der Off-line-Mitteilung (13) mit den Feldern von mindestens einem der Sätze in der Datenbank (7) überein, veranlasst das genannte Verwaltungscenter (5) eine Off-line-Mitteilung (15), die Felder des Satzes der Service-Datenbank (7) und Informationen in Bezug auf den Service-Anbieter (1)/ Kunden (3) einschließt, und
- das Verwaltungscenter (5) sendet die Off-line-Mitteilung (15) an den Anbieter (1) /Kunden (3).

2. Ein Verfahren gemäß Anspruch 1, **dadurch gekennzeichnet, dass** der genannte Schritt der Registrierung jedes Anbieters (1) durch das genannte Verwaltungscenter (5) durch die Zuweisung eines Anbieter-Kenncodes (IDF) für jeden einzelnen der Anbieter (1) erfolgt, wobei der genannte Anbieter-Kenncode (IDF) in einer Anbieter-Datenbank (19) zusammen mit mindestens einer Telefonnummer jeder Anbieter (1) gespeichert und verwendet wird, um den Kunden (3) in der Mitteilung (15) Informationen zu senden, die den gewählten Anbieter (1) kennzeichnen.

3. Ein Verfahren gemäß Anspruch 2, **dadurch gekennzeichnet, dass** der genannte Anbieter-Kenncode (IDF) in der Anbieter-Datenbank (19) zusammen mit die Personaldaten betreffenden Informationen in Bezug auf den Anbieter gespeichert ist.

4. Ein Verfahren gemäß Anspruch 1, **dadurch gekennzeichnet, dass** der genannte Schritt der Registrierung jedes einzelnen Kunden (3) durch das genannte Verwaltungscenter (5) durch Zuweisung eines Kenncodes (IDC) für jeden einzelnen Kunden (3) erfolgt, wobei der genannte Kundenkenncode (IDC) in einer Kundendatenbank (21) zusammen mit mindestens einer Telefonnummer für jeden einzelnen Kunden (3) gespeichert ist und mit jeder Mitteilung (10, 13) gekoppelt wird, die vom Kunden (3) an das Verwaltungscenter (5) geschickt wird.

5. Ein Verfahren gemäß Anspruch 4, **dadurch gekennzeichnet, dass** der genannte Kundenkenncode (IDC) in der Kundendatenbank (21) zusammen mit die Personaldaten betreffenden Informationen in Bezug auf den Kunden gespeichert ist.

6. Ein Verfahren gemäß den Ansprüchen 2, 3, 4 oder 5, **dadurch gekennzeichnet, dass** der genannte Anbieter-Kenncode (IDF) und der genannte Kundenkenncode (IDC) identisch sind, wobei die jeweilige Anbieter-Datenbank (19) und die Kunden-Datenbank (21) jeweils aus einer einzigen umfassenden Benutzer-Datenbank bestehen.

7. Ein Verfahren gemäß Anspruch 1, **dadurch gekennzeichnet, dass** die genannten geschlossenen Felder eine vorbestimmte Anzahl von Werten enthalten, die geeignet sind, einen Vergleich zwischen den jeweils entsprechenden Feldern der Sätze der Datenbank (7) zu ermöglichen, wobei einige der genannten geschlossenen Felder durch das Verwaltungscenter (5) als Schlüsselfelder für die Suche vorbestimmt sind.

8. Ein Verfahren gemäß Anspruch 1, **dadurch gekennzeichnet, dass** die Mitteilung (11), die vom Verwaltungscenter (5) zum Anbieter (1) / Kunden (3) geschickt wird, Regeln zur Bereitstellung von Werten für die Felder enthält, und dass das Verfahren den Schritt der Durchführung einer Übereinstimmungskontrolle der Werte jener Felder umfasst, die vom Anbieter (1) / Kunden (3) ausgefüllt werden, wobei die Übereinstimmungskontrolle vermeidet, dass die Mittelung (13) zum Verwaltungscenter (5) geschickt wird, ehe alle Regeln für die Versorgung aller Felder mit Werten befolgt wurden.

9. Ein Verfahren gemäß Anspruch 1, **dadurch gekennzeichnet, dass** es, in Ermangelung von Übereinstimmung zwischen der Mitteilung und den Datensätzen der gewählten Datenbank (7), des weiteren folgende Schritte umfasst:
- das Verwaltungscenter (5) sendet eine Mitteilung (17), die die mangelnde Datenauffindung an den Anbieter (1) / Kunden (3) meldet; und
- möglichst die Mitteilung (13) durch das Verwaltungscenter (5) während einer vorbestimmten Zeit speichert, binnen derer die Suche nach Übereinstimmung in der Datenbank (7) wieder durchgeführt werden muss.

10. Ein Verfahren gemäß Anspruch 1, **dadurch gekennzeichnet, dass** es des weiteren den Schritt der Löschung der Mitteilung (13) im Fall mangelnder Übereinstimmung oder jeweils auf Anfrage des Anbieters (1) / Kunden (3) umfasst.

11. Ein Verfahren gemäß Anspruch 10, **dadurch gekennzeichnet, dass** die Mitteilung (13) durch Verwendung eines Einsatzcodes gelöscht wird, der die zuvor eingegebene Mitteilung (13) eindeutig identifiziert.

12. Ein Verfahren gemäß einem beliebigen der vorausgegangenen Ansprüche, **dadurch gekennzeichnet, dass** das genannte Service-Menü (9) mindestens ein damit zusammenhängendes Untermenü umfasst, das weitere Informationen über die Leistungen enthält.

13. Ein Verfahren gemäß einem beliebigen der vorausgegangenen Ansprüche, **dadurch gekennzeichnet, dass** alle ausgetauschten Mitteilungen (9, 10, 11,13,15, 17) Felder des offenen und/oder geschlossenen Typs umfassen, in die die Anbieter (1) /Kunden (3) Werte eingeben können.

14. Ein Verfahren gemäß einem beliebigen der vorausgegangenen Ansprüche, **dadurch gekennzeichnet, dass** das genannte Center (5) geeignet ist, den Austausch von Telefonmitteilungen des Typs Short Message Service (SMS) auf Mobiltelefonen abzuwickeln.

15. Ein Verfahren gemäß einem beliebigen der Ansprüche von 1 bis 13, **dadurch gekennzeichnet, dass** das genannte Center (5) geeignet ist, den Austausch von Sprechmitteilungen abzuwickeln.

## Revendications

1. Procédé de gestion des échanges de messages hors-ligne (off-line) entre des fournisseurs de services téléphoniques (1) et des clients (3), ce procédé étant géré par au minimum un centre de gestion (5) destiné à coopérer avec lesdits fournisseurs (1) et clients (3), ledit procédé comprenant les phases suivantes :
- enregistrement de chacun des fournisseurs (1) par ledit centre de gestion (5) ;
- enregistrement de chacun des clients (3) par ledit centre de gestion (5) ;
- pour chacun des services à offrir, élaboration par ledit centre de gestion (5) d'une base de données de services (7) contenant une pluralité de champs (F1, _, Fn) se rapportant à des informations nécessaires pour fournir le service ;
- élaboration d'un menu de services (9) comprenant tous les services offerts par le centre de gestion (5), chaque fournisseur (1) / client (3) pouvant avoir accès audit menu de services (9) ;
- si un fournisseur (1) / client (3) sélectionne un élément du menu de services (9) auquel il a accès, ledit fournisseur (1) / client (3) envoie audit centre de gestion (5) un message hors-ligne (off-line) (10) demandant des informations se rapportant au service ;
- en cas de réception d'un message de demande d'informations (10), le centre de gestion (5) envoie au fournisseur (1) / client (3) un message hors-ligne (off-line) (11) contenant une pluralité de champs (G1, _, Gn) avec des valeurs du type fermé, ledit message hors-ligne (off-line) (11) étant la base pour créer une clé d'accès à la base de données de services correspondante (7) dans laquelle des informations se rapportant au service sélectionné sont stockées ;
- quand le fournisseur (1) / client (3) reçoit le message hors-ligne (off-line) (11), le fournisseur (1) / client (3) sélectionne les valeurs des champs (G1, _, Gn) étant en mesure de ne choisir que parmi des valeurs préfixées établies selon les choix du fournisseur (1) / client (3), et, après avoir choisi parmi les valeurs préfixées, le fournisseur (1) / client (3) crée un message hors-ligne (off-line) (13) contenant une pluralité de champs (H1, _, Hn) avec les valeurs préfixées sélectionnées respectives, ledit message hors-ligne (off-line) (13) avec des valeurs étant une clé d'accès à la base de données de services correspondante (7) pour le service sélectionné ;
- à la fin de la sélection, le fournisseur (1) / client (3) envoie le message hors-ligne (off-line) (13) avec des valeurs au centre de gestion (5) ;
- quand le centre de gestion (5) reçoit le message hors-ligne (off-line) (13), le centre de gestion (5) compare le message hors-ligne (off-line) (13) reçu avec les enregistrements de données que la base de données correspondante (7) du service sélectionné contient ;
- si les champs dans un message hors-ligne (off-line) (13) correspondent aux champs d'au minimum un des enregistrements dans la base de données (7), ledit centre de gestion (5) élabore un message hors-ligne (off-line) (15) comprenant des champs de l'enregistrement de la base de données de services (7) et des informations se rapportant au fournisseur (1) / client (3) du service ; et
- le centre de gestion (5) envoie un message hors-ligne (off-line) (15) au fournisseur (1) / client (3).

2. Procédé selon la revendication 1, **caractérisé en ce que** ladite phase d'enregistrement de chacun des fournisseurs (1) par ledit centre de gestion (5) est réalisée en attribuant un code d'identification fournisseur (IDF) à chacun des fournisseurs (1), ledit code d'identification fournisseur (IDF) étant stocké dans une base de données fournisseurs (19) avec au minimum un numéro de téléphone pour chacun des fournisseurs (1) et étant utilisé pour envoyer aux clients (3) des informations identifiant le fournisseur sélectionné (1) dans le message (15).

3. Procédé selon la revendication 2, **caractérisé en ce que** ledit code d'identification fournisseur (IDF) est stocké dans la base de données fournisseurs (19) avec les coordonnées du fournisseur.

4. Procédé selon la revendication 1, **caractérisé en ce que** ladite phase d'enregistrement de chacun des clients (3) par ledit centre de gestion (5) est réalisée en attribuant un code d'identification client (IDC) à chacun des clients (3), ledit code d'identification client (IDC) étant stocké dans une base de données clients (21) avec au minimum un numéro de téléphone pour chacun des clients (3) et étant couplé avec chaque message (10, 13) envoyé par le client (3) au centre de gestion (5).

5. Procédé selon la revendication 4, **caractérisé en ce que** ledit code d'identification client (IDC) est stocké dans la base de données clients (21) avec les coordonnées du client.

6. Procédé selon la revendication 2, 3, 4 ou 5, **caractérisé en ce que** ledit code d'identification fournisseur (IDF) et ledit code d'identification client (IDC) sont identiques, la base de données fournisseurs (19) et la base de données clients (21) correspondantes étant composées d'une seule base de données utilisateurs globale.

7. Procédé selon la revendication 1, **caractérisé en ce que** lesdits champs fermés contiennent un nombre préétabli de valeurs permettant une comparaison entre les champs correspondants des enregistrements de la base de données (7), certains desdits champs fermés étant prédéfinis par le centre de gestion (5) comme des champs-clé pour la recherche.

8. Procédé selon la revendication 1, **caractérisé en ce que** le message (11) envoyé par le centre de gestion (5) au fournisseur (1) / client (3) contient des règles pour fournir des valeurs pour les champs, et que le procédé comprend l'étape de réalisation d'un contrôle de correspondance des valeurs de ces champs étant remplis par le fournisseur (1) / client (3), le contrôle de correspondance évitant que le message (13) ne soit envoyé au centre de gestion (5) avant que toutes les règles pour fournir des valeurs pour les champs n'aient été satisfaites.

9. Procédé selon la revendication 1, **caractérisé en ce que**, en cas d'absence de correspondance entre un message (13) et des enregistrements de la base de données sélectionnée (7), il comprend également les phases de :
- envoi de la part du centre de gestion (5) d'un message (17) notifiant l'absence de repérage des informations au fournisseur (1) / client (3) ; et
- enregistrement possible du message (13) par le centre de gestion (5) pour une période de temps préétablie au cours de laquelle la recherche de correspondance dans la base de données (7) doit être de nouveau réalisée.

10. Procédé selon la revendication 1, **caractérisé en ce qu'**il comprend également la phase d'effacement du message (13) en cas d'absence de correspondance, ou après une demande de la part du fournisseur (1) / client (3).

11. Procédé selon la revendication 10, **caractérisé en ce que** le message (13) est effacé en utilisant un Code de Saisie qui identifie de manière univoque le message préalablement saisi (13).

12. Procédé selon une revendication quelconque parmi les revendications susmentionnées, **caractérisé en ce que** ledit menu de services (9) comprend au minimum un sous-menu relié contenant de plus amples informations sur les services.

13. Procédé selon une revendication quelconque parmi les revendications susmentionnées, **caractérisé en ce que** tous les messages échangés (9, 10, 11, 13, 15, 17) comprennent des champs du type fermé et/ou ouvert dans lesquels des fournisseurs (1) / clients (3) peuvent saisir des valeurs.

14. Procédé selon une revendication quelconque parmi les revendications susmentionnées, **caractérisé en ce que** ledit centre (5) permet de réaliser des échanges de messages téléphoniques du type « Short Message Service (SMS) » sur des téléphones portables.

15. Procédé selon une revendication quelconque parmi les revendications allant de 1 à 13, **caractérisé en ce que** ledit centre (5) permet de réaliser des échanges de messages de type vocal.
